# DEMANDE DE BREVET EUROPEEN

(11) **EP 1 229 451 A1**
(43) Date de publication de la demande: **07.08.2002**
(21) Numéro de dépôt: 02002234.9
(22) Date de dépôt: 30.01.2002
(51) Int. Cl.: G06F 12/06

(54) **Programmation d'adresses de périphériques, notamment pour un dispositif de climatisation de véhicule automobile**

(30) Priorité: 05.02.2001 FR 0101479
(71) Demandeur: VALEO CLIMATISATION, 78321 La Verrière (FR)
(72) Inventeur: Grendene, Bruno, 91390 Morsang-sur-Orge (FR); Kerachian, Mina, 78180 Montigny le Bretonneux (FR)
(74) Mandataire: Gérard, Michel

(57) **Abrégé**

A chaque emplacement de montage (12a, 12b) d'un périphérique (20a, 20b) sur un boîtier de climatisation (10), est associé un ensemble matériel particulier (14a, 14b) qui définit sous forme physique l'adresse du périphérique. Lors de son montage le périphérique est raccordé à cet ensemble matériel de manière à pouvoir lire cette adresse et la mémoriser sous forme logique, permettant un adressage ultérieur spécifique du périphérique via un bus d'informations (40). Le raccordement d'un périphérique à son adresse physique peut être réalisé au moyen d'une nappe souple (22a, 22b) portant un ensemble de conducteurs.

## Description

### Arrière-plan de l'invention

La présente invention concerne la programmation d'adresses de périphériques lors de leur installation en des emplacements de montage, afin de leur assigner des adresses prédéterminées et permettre leur adressage sélectif via un bus d'informations auquel ils sont reliés.

Un domaine particulier d'application de l'invention est celui des dispositifs de climatisation de véhicules automobiles.

Ces dispositifs comprennent généralement un boîtier de climatisation sur lequel sont montés un certain nombre de périphériques tels que notamment des actionneurs de commande de volets de distribution et de mixage d'air, actionneurs habituellement constitués par des moteurs pas à pas.

De tels actionneurs sont reliés à un circuit central de commande pour être commandés individuellement et retransmettre au circuit central des informations par exemple relatives à leur état. Afin d'éviter la présence de volumineux faisceaux de fils, du fait du nombre élevé d'actionneurs répondant à une sophistication accrue des dispositifs de climatisation, il est connu de relier les actionneurs à un bus d'informations sur lequel transitent des informations de commande et des informations d'état.

Lors du montage des actionneurs, une programmation de leur adresse est nécessaire pour affecter à chaque actionneur l'adresse qui lui est allouée et qui permet de le différencier des autres actionneurs reliés sur le même bus.

Cette programmation peut être effectuée individuellement, à travers le bus d'informations, lors du montage, en accédant à chaque nouvel actionneur installé par son adresse initialement fixée à la valeur 0. Une telle programmation est relativement longue et des erreurs peuvent facilement se produire en raison des ressemblances physiques entre actionneurs pourtant assignés à des fonctions différentes. Le problème de la programmation, avec le même risque d'erreur, se présente non seulement au montage initial des actionneurs, mais également lors de réparations.

### Objets et résumé de l'invention

L'invention a pour objet de proposer un procédé de programmation d'adresses qui évite les inconvénients précités, que ce soit pour des actionneurs d'un dispositif de climatisation, plus généralement, pour des périphériques reliées à un bus d'informations.

Ce but est atteint grâce à un procédé selon lequel, à chaque emplacement de montage d'un périphérique, on associe une adresse physique matérialisée par un ensemble matériel et, lors du montage d'un périphérique à son emplacement, on connecte physiquement le périphérique à l'adresse physique associée à cet emplacement de manière à pouvoir recueillir une information d'adresse de périphérique correspondant à l'adresse physique.

Par ensemble matériel définissant une adresse physique, on entend ici un ensemble dont la configuration représente une adresse physique, par exemple un ensemble comprenant une succession de présence ou d'absence d'éléments matériels. Les éléments matériels sont, par exemple, des parties en relief formées sur le boîtier ou sur une pièce portée par le boîtier, ou des contacts électriques. Par souci de simplicité, on désignera ci-après sous les termes "adresse physique" un tel ensemble matériel.

L'invention est remarquable en ce que la programmation de l'adresse d'un périphérique est réalisée simplement par raccordement avec l'adresse physique correspondant à l'emplacement de montage. L'adresse physique correspondant à un emplacement de montage pourra simplement être celle située le plus à proximité de cet emplacement.

Chaque périphérique peut être connecté à une adresse physique au moyen d'un raccord portant une pluralité de conducteurs, et l'adresse est lue par détection de la continuité ou de l'absence de continuité électrique sur lesdits conducteurs, en réponse à la liaison physique entre le raccord et l'adresse physique.

Le raccord peut être sous forme d'une nappe souple portant lesdits conducteurs ainsi qu'éventuellement des circuits électroniques propres au périphérique.

L'invention a aussi pour but de proposer un dispositif de climatisation mettant en oeuvre le procédé ci-dessus.

Ce but est atteint avec un dispositif de climatisation de véhicule automobile comprenant un boîtier de climatisation, des périphériques montés en des emplacements différents du boîtier de climatisation et un bus d'informations sur lequel sont reliés les périphériques, dispositif dans lequel, conformément à l'invention, à chaque emplacement de montage d'un périphérique sur le boîtier est associé un ensemble matériel particulier qui définit sous forme physique l'adresse du périphérique et auquel le périphérique est raccordé.

### Brève description des dessins

L'invention sera mieux comprise à la lecture de la description faite ci-après, à titre indicatif mais non limitatif, en référence aux dessins annexés, sur lesquels :
- la figure 1 est une vue partielle d'une installation de climatisation en cours de montage selon un mode particulier de réalisation de l'invention ;
- la figure 2 est un schéma de circuits d'un périphérique de l'installation de la figure 1,
- la figure 3 est une vue à échelle agrandie illustrant une première variante de réalisation d'une adresse physique sur un boîtier de climatisation ; et
- la figure 4 est une vue à échelle agrandie illustrant une deuxième variante de réalisation d'une adresse physique sur un boîtier de climatisation.

### Description détaillée de modes de réalisation de l'invention

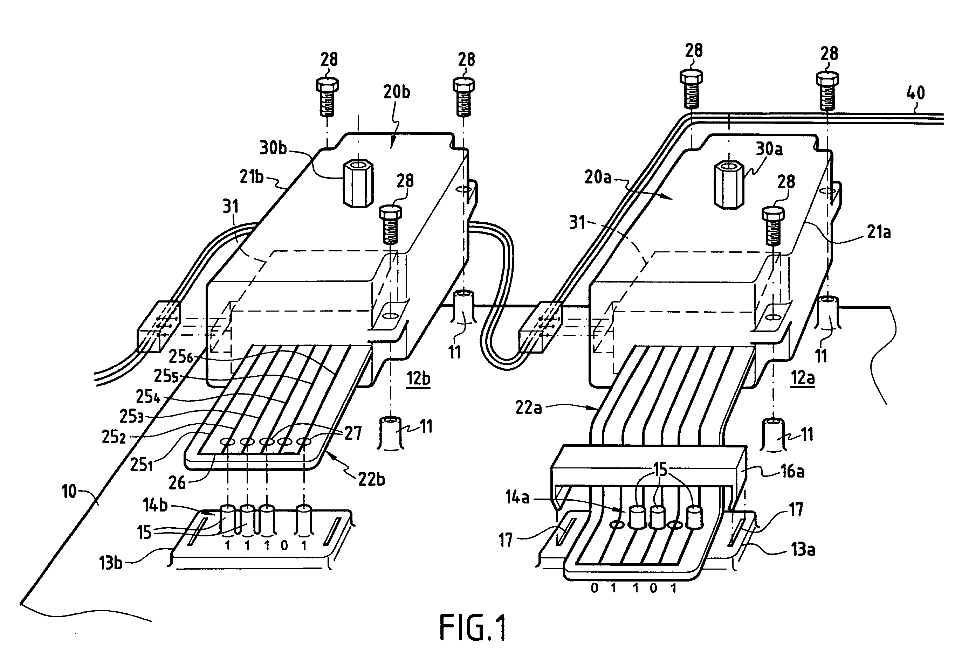

La figure 1 montre schématiquement une partie d'une installation de climatisation d'un véhicule automobile comprenant un boîtier de climatisation 10 et des périphériques 20a, 20b destinés à être montés sur le boîtier, en l'espèce des actionneurs pour commander des volets (non représentés) de répartition et mixage d'air par l'intermédiaire d'axes de sortie 30a, 30b.

Les actionneurs sont en nombre plus ou moins important, selon le degré de sophistication de l'installation. Ils sont constitués typiquement par des moteurs pas à pas.

L'installation de climatisation comporte d'autres périphériques (non représentés) tels un tableau de commande et des capteurs de température, fixés ou non sur le boîtier 10.

L'ensemble des périphériques de l'installation est raccordé à un bus d'informations 40 par lequel des informations peuvent être transmises aux périphériques ou reçues de ceux-ci par adressage logique sélectif. Les périphériques sont également alimentés en énergie électrique par un bus électrique (non représenté).

Chaque actionneur 20a, 20k est monté dans un boîtier 21a, 21b renfermant une électronique 31 et fixé par vissage sur des plots de fixation 11 portés par le boîtier de climatisation 10 et définissant un emplacement 12a, 12b de montage de l'actionneur.

Le boîtier 10 porte en outre des plages 13a, 13b portant des adresses physiques 14a, 14b définies par une succession de présence ou d'absence de plots 15 faisant saillie suivant une rangée à la surface des plages 13a, 13b du boîtier 10. Les adresses physiques formées sur le boîtier 10 sont toutes distinctes et se différencient les unes des autres par la configuration des rangées de plots (ou d'absence de plot).

Les adresses physiques 14a, 14b sont associées à des emplacements de montage respectifs 12a, 12b. Chaque adresse physique représente l'adresse logique du périphérique devant être monté à l'emplacement de montage correspondant à cette adresse. L'adresse physique associée à un emplacement de montage est avantageusement celle qui en est la plus proche.

La programmation de l'adresse logique d'un périphérique est réalisée par lecture de l'adresse physique correspondant à l'emplacement de montage de ce périphérique.

A cet effet, chaque périphérique 20a, 20b comprend un raccord 22a, 22b qui relie le boîtier 21a, 21b à l'adresse physique. Dans l'exemple illustré, le raccord 22a, 22b est une nappe flexible portant une pluralité de conducteurs parallèles 25₁, 25₂, 25₃, 25₄, 25₅, 25₆, par exemple sous forme de fils conducteurs ou de métallisations. Les conducteurs s'étendent le long de la nappe 22a, 22b jusqu'au voisinage de l'extrémité libre de celle-ci, et sont reliés entre eux, à leur extrémité la plus éloignée du boîtier 21a, 21b, par un conducteur commun 26.

La nappe 22a, 22b est raccordée sur l'adresse physique associée 14a, 14b par enfichage, au voisinage de son extrémité libre, sur les plots 15 de l'adresse physique.

Le pas des conducteurs 25₂ à 25₆ mesuré transversalement à une nappe 22a, 22b correspond au pas des emplacements de plots 15 sur la plage de l'adresse physique correspondante 14a, 14b.

L'enfichage d'une nappe, telle que la nappe 22a, sur l'adresse physique correspondante 14a est réalisé de manière que les plots 15 de celle-ci traversent la nappe et coupent ceux des conducteurs 25₂ à 25₆ dont les emplacements correspondent à ceux de ces plots. Cela pourra être facilité en formant des zones d'affaiblissement dans la nappe aux emplacements dans lesquels des plots sont susceptibles d'être enfichés. Ces zones d'affaiblissement 27 peuvent être obtenues par enlèvement localisé du matériau de la nappe pour ne laisser que le conducteur.

Le maintien de la partie d'extrémité de la nappe 22a sur l'adresse physique correspondante peut être assuré au moyen d'un capot 16a portant des pattes d'extrémité qui se logent et se verrouillent dans des fentes 17 prévues aux extrémités de la plage 13a.

Un montage similaire pourra être prévu pour la partie d'extrémité de la nappe 22b qui s'enfiche sur l'adresse physique 14b.

La programmation de l'adresse d'un périphérique peut alors être faite par détection à partir de l'électronique 31 de la continuité électrique ou d'une discontinuité électrique sur les conducteurs 25₂, 25₃, 25₄, 25₅, 25₆, via le conducteur commun 26 et le conducteur 25₁. Une continuité ou une discontinuité détectée se traduit par un premier niveau logique ou un deuxième niveau logique différent du premier. La succession des niveaux logiques traduisant les états des conducteurs 25₂ à 25₆ forme l'adresse logique du périphérique. Ainsi, dans l'exemple illustré par la figure 1, les adresses physiques 14a et 14b correspondent à des adresses logiques 01101 et 11101, un niveau logique 0 correspondant à une continuité de conducteur sur la nappe 22a ou 22b.

Un périphérique étant monté à l'emplacement de montage qui lui est assigné sur le boîtier 10, la programmation de l'adresse de ce périphérique peut être réalisée simplement et sans risque d'erreur par enfichage du raccord de ce périphérique sur l'adresse physique associée à cet emplacement de montage. Il est avantageux que cette adresse physique soit celle située la plus proche de l'emplacement de montage pour éliminer les risques d'erreurs, limiter la longueur des raccords et éviter que ceux-ci se croisent.

L'utilisation d'un raccord sous forme de nappe souple 22a, 22b est avantageux, notamment pour éviter un caractère hyperstatique du montage du boîtier de périphérique sur le boîtier de climatisation, ce montage étant, dans l'exemple illustré, réalisé en trois points par vis 28.

La nappe 22a, 22b peut être en une matière plastique souple portant des conducteurs par exemple en cuivre. Le boîtier de climatisation 10 est en matière plastique, les plages 13a, 13b avec les plots 15 d'adresse physique, de même que les plots de fixation 11, étant moulés en une seule pièce avec le boîtier 10. De la sorte, la présence des adresses physiques sur le boîtier 10 n'entraîne pas de surcoût notable. En outre, les capots tels que 16a peuvent aussi être réalisés par moulage de matière plastique, et ne sont pas différenciés, d'où également une absence de surcoût important de fabrication ou gestion de pièces.

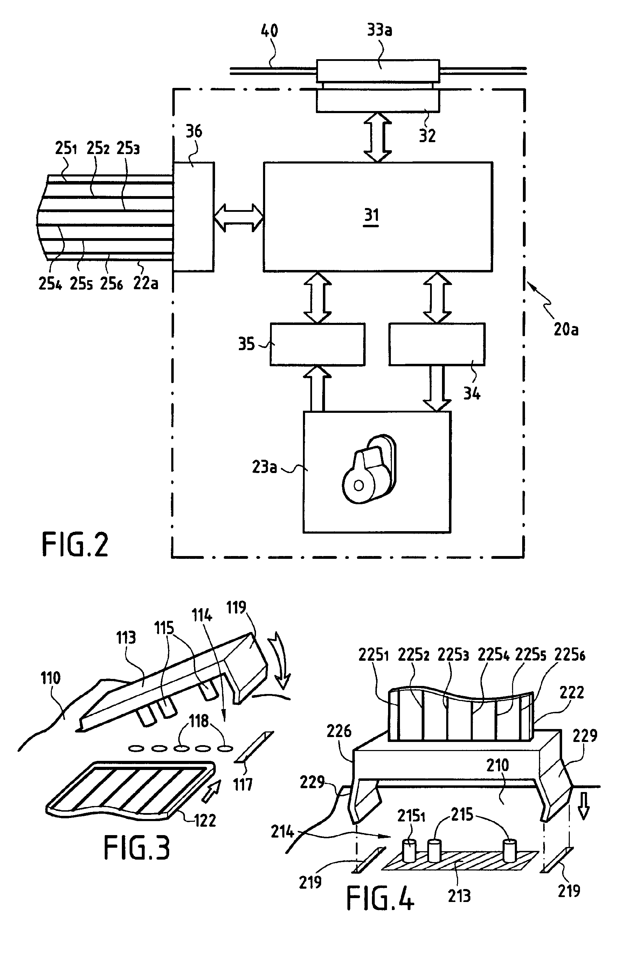

Comme le montre la figure 2, l'électronique 31 logée dans le boîtier d'actionneur par exemple 20a comprend un circuit de contrôle à microprocesseur 31 avec circuits mémoires associés.

Le circuit de contrôle 31 est connecté à une interface de bus 32 qui se raccorde à un connecteur 33a monté sur le bus d'informations 40. Le circuit de contrôle est en outre connecté à une interface analogique 34 qui alimente le moteur 23a de l'actionneur 20a, par exemple une interface analogique d'alimentation d'enroulements de moteurs pas à pas. Le circuit de contrôle peut en outre recueillir des informations d'état de l'actionneur, telles que des informations de position ou d'arrivée en butée de fin de course, à travers une interface 35. Enfin, le circuit de contrôle 31 est relié à la nappe souple 22a par une interface 36 constituée par un connecteur relié aux conducteurs de la nappe.

La programmation d'adresse est réalisée par le circuit de contrôle 31. A cet effet, à travers l'interface 36, un niveau logique est appliqué au conducteur 25₁ de la nappe et les niveaux logiques présents sur les conducteurs 25₂ à 25₆ sont détectés, lesquels constituent l'adresse logique recherchée.

Cette adresse est stockée dans une mémoire non volatile ou volatile. Dans ce dernier cas, une lecture et un stockage de l'adresse sont réalisés à chaque mise sous tension.

Dans l'exemple de la figure 3, la nappe 22a est utilisée seulement comme support des conducteurs 25₁ à 25₆. En variante, la nappe 22a peut être utilisée aussi comme circuit imprimé souple supportant au moins en partie l'électronique 31 de l'actionneur.

Bien que l'on ait décrit une forme simple de codage matériel d'adresse sur le boîtier de climatisation, d'autres formes d'adresses physiques portées par le boîtier peuvent être utilisées.

Dans l'exemple de la figure 3, une adresse physique 114 est constituée par une succession, en rangée, d'absence ou de présence de plots 115 portés par un rabat 113 articulé sur le boîtier de climatisation 110. Des trous 118 sont ménagés dans le boîtier pour permettre le logement des plots 115 lorsque le rabat 113 est appliqué contre la surface du boîtier 110. Le maintien du rabat dans cette position est assuré par pénétration et blocage d'une patte 119, faisant saillie à l'extrémité du rabat 114, dans une fente 117 formée dans le boîtier.

Un périphérique monté sur le boîtier 110 en un emplacement de montage correspondant à l'adresse physique 114 est relié à celle-ci au moyen d'un raccord 122 sous forme de nappe flexible semblable aux nappes 20a, 20b, de la figure 1. La nappe 122 est mise en place avec sa partie d'extrémité libre située au-dessus des logements 118. Le rabat 113 est ensuite appliqué contre la surface du boîtier 110, ce qui provoque le percement de la nappe et l'ouverture de conducteurs portés par celle-ci en des emplacements correspondant à la présence de plots 115.

Le rabat 113 avec les plots 115 peut être moulé en une seule pièce avec le boîtier 110, avec une partie de liaison amincie formant une articulation. Il est possible aussi de monter le rabat 113 autour d'un axe d'articulation porté par le boîtier.

Dans l'exemple de la figure 4, une adresse physique 214 est constituée par une succession, en rangée, de présence ou d'absence de pièces de contacts électriques mâles 215 fixés sur une bande conductrice 213 à la surface d'un boîtier de climatisation 210 ou, éventuellement dans un renfoncement de cette surface. Un contact électrique mâle 215₁ est porté par la bande conductrice 213, dans l'alignement des contacts ou emplacements de contacts 215 formant l'adresse 214.

Le raccordement à l'adresse physique 214 d'un périphérique monté sur le boîtier 210 en un emplacement correspondant à cette adresse physique est réalisé au moyen d'un raccord sous forme de nappe souple 222. Celle-ci porte une pluralité de conducteurs 225₁ à 225₆ et se distingue des nappes 22a, 22b de la figure 1 en ce que les conducteurs sont reliés à leurs extrémités à des contacts femelles respectifs d'un connecteur 226.

Le connecteur 226 est enfiché sur l'adresse physique 214 avec le conducteur 225₁ relié au contact 215₁. La continuité électrique entre le conducteur 225₁ et les conducteurs respectifs 225₂ à 225₆ dépend de la présence d'un contact 215 dans l'adresse physique 214.

Le connecteur 226 est muni à ses extrémités de pattes 229 qui pénètrent et se bloquent dans des ouvertures 219 formées dans le boîtier 210.

Bien que l'on ait envisagé ci-dessus une programmation d'adresse de périphérique de dispositif de climatisation de véhicule, il apparaît immédiatement que le principe d'adressage physique décrit peut être utilisé dans d'autres applications.

## Revendications

1. Procédé de programmation d'adresses de périphériques lors de leur installation en des emplacements de montage, afin de leur assigner des adresses prédéterminées et permettre leur adressage sélectif via un bus d'informations sur lequel ils sont reliés, **caractérisé en ce que**, à chaque emplacement de montage d'un périphérique, on associe une adresse physique matérialisée par un ensemble matériel et, lors du montage d'un périphérique à son emplacement, on connecte physiquement le périphérique à l'adresse physique associée à cet emplacement au moyen d'un raccord portant une pluralité de conducteurs, et une information d'adresse de périphérique est lue par détection de la continuité ou de l'absence de continuité électrique sur lesdits conducteurs, en réponse à la liaison physique entre le raccord et l'adresse physique.

2. Procédé selon la revendication 1, **caractérisé en ce que** l'on associe à chaque emplacement de montage une adresse physique matérialisée par une succession de présence ou d'absence de parties en relief.

3. Procédé selon la revendication 2, **caractérisé en ce qu'**une absence de continuité électrique sur un conducteur du raccord est obtenue par rupture du conducteur par action d'une partie en relief sur laquelle le raccord est engagé.

4. Procédé selon la revendication 1, **caractérisé en ce que** l'on associe à chaque emplacement une adresse physique matérialisée par une succession de présence ou d'absence de contact électrique.

5. Dispositif de climatisation de véhicule automobile comprenant un boîtier de climatisation, des périphériques montés en des emplacements différents du boîtier de climatisation et un bus d'informations sur lequel sont reliés les périphériques, **caractérisé en ce que**, à chaque emplacement de montage d'un périphérique sur le boîtier est associé un ensemble matériel particulier (14a, 14b ; 114 ; 214) qui définit sous forme physique l'adresse du périphérique et auquel le périphérique est raccordé.

6. Dispositif selon la revendication 5, **caractérisé en ce que** chaque périphérique est connecté à une adresse physique au moyen d'un raccord (22a, 22b ; 122 ; 222) portant une pluralité de conducteurs.

7. Dispositif selon la revendication 6, **caractérisé en ce que** le raccord est sous forme d'une nappe souple (22a, 22b ; 122 ; 222) portant lesdits conducteurs.

8. Dispositif selon la revendication 7, **caractérisé en ce que** la nappe souple porte en outre des circuits électroniques propres au périphérique.

9. Dispositif selon l'une quelconque des revendications 6 à 8, **caractérisé en ce que** chaque adresse physique comprend une succession de présence ou d'absence d'éléments matériels (15; 115; 215), la présence ou l'absence d'un élément matériel se traduisant par une continuité ou une absence de continuité, ou inversement, sur un conducteur électrique correspondant porté par le raccord.

10. Dispositif selon l'une quelconque des revendications 6 à 9, **caractérisé en ce que** l'adresse physique est matérialisée par une succession de présence ou d'absence de parties en relief (15 ; 115 ; 215) sur lesquelles le raccord est enfiché.

11. Dispositif selon la revendication 10, **caractérisé en ce que** les parties en relief (15) sont moulées sur le boîtier (10).

12. Dispositif selon la revendication 10, **caractérisé en ce que** les parties en relief (115) sont formées sur une pièce (113) portée par le boîtier (110) et coopérant avec des logements (118) formés dans le boîtier.

13. Dispositif selon l'une quelconque des revendications 6 à 9, **caractérisé en ce que** l'adresse physique est matérialisée par une succession de présence ou d'absence de contacts électriques (215) portés par le boîtier (210), la présence d'un contact électrique établissant une continuité électrique sur un conducteur correspondant porté par le raccord (222).

14. Dispositif selon l'une quelconque des revendications 5 à 13, **caractérisé en ce que** l'adresse physique (14a, 14b) associée à un emplacement de montage (12a, 12b) est celle située la plus proche de cet emplacement.
